# EUROPÄISCHE PATENTANMELDUNG

(11) **EP 2 891 551 A1**
(43) Veröffentlichungstag der Anmeldung: **08.07.2015**
(21) Anmeldenummer: 14150372.2
(22) Anmeldetag: 07.01.2014
(51) Int. Cl.: B29C 45/00

(54) **Spritzgiesswerkzeug für das Herstellen eines Reissverschlussschiebers und selbiger Reissverschlussschieber**

(71) Anmelder: Speedomatic AG, CH-2543 Lengnau (CH)
(72) Erfinder: Mayerhofer, Friedrich, 2543 Lengnau (CH)
(74) Vertreter: AMMANN PATENTANWÄLTE AG BERN

(57) **Zusammenfassung**

In einem Spritzgiesswerkzeug (19) zur Herstellung eines Reissverschlussschiebers (1) aus Kunststoff ist mindestens eine Düse (37) direkt mündend in ein Formnest (23, 25, 27) angeordnet, sodass die Herstellung der Reissverschlussschieber mit weniger oder ohne Angussteile möglich ist. In einem Spritzgiesswerkzeug (19), bei dem die Zuglasche (3) funktionsfähig am Reissverschlussschieber-Körper (5) hergestellt wird, ist im Formnest ein Kanal zwischen Reissverschlussschieber-Körper, insbesondere der Innenseite des die Lasche haltenden Bügels (7), und der Lasche (3), insbesondere dem unter dem Bügel (7) hindurch verlaufenden Quersteg (11), vorgesehen, so dass Kunststoff vom Formteil für die Lasche (3) oder für den Reissverschlussschieber-Körper (5) zum jeweils anderen Formteil gelangen kann. Der Kanal (27) ist dabei so ausgebildet, dass die dadurch gebildete Brücke (8) zwischen den Reissverschlussschieber-Teilen eine Sollbruchstelle darstellt, die mit geringem Kraftaufwand und ohne Folgen für die Funktionsfähigkeit zerbrochen werden kann.

## Beschreibung

Die vorliegende Erfindung bezieht sich auf ein Spritzgiesswerkzeug für das Herstellen eines Reissverschlussschiebers aus Kunststoff gemäss Oberbegriff des Anspruchs 1. Des Weiteren bezieht sie sich auf einen mit diesem Werkzeug hergestellten Reissverschlussschieber.

Reissverschlussschieber aus Kunststoff werden in grossen Mengen durch Spritzen mittels Spritzgiesswerkzeugen hergestellt, die ein oder mehrere Formnester zum Ausbilden des Schiebers aufweisen. Im europäischen Patent EP-B-0604695 wird ein geeignetes Werkzeug beschrieben, mit dem es möglich ist, einen Reissverschlussschieber-Körper mit Zuglasche in einem Spritzvorgang herzustellen, sodass der aus dem Werkzeug ausgestossene Reissverschlussschieber nach Entfernen des Angusses einsatzfertig ist.

Nachteilig an den bekannten Spritzgiesswerkzeugen für Reissverschlussschieber ist, dass zusammen mit den Reissverschlussschiebern ein grosser Anteil an Spritzmasse in Form des Angusses im Werkzeug erstarrt und zusammen mit den Schiebern ausgestossen wird. Zum einen müssen die Reissverschlussschieber durch einen eigenen Vorgang von dem Anguss abgetrennt werden. Zum andern stellt der Anguss einen relativ grossen Teil der gesamten Masse dar, z.B. 1/4 bis 1/3. Diese Menge muss in den Produktionsprozess zurückgeführt werden. Dazu wird der Anguss zermahlen und mit frischem Material neu aufgeschmolzen. Es ist jedoch bekannt, dass dieses Rezyklieren nicht beliebig oft vorgenommen werden kann, da die Qualität des Materials mit jedem Aufschmelzvorgang abnimmt.

Eine Aufgabe der vorliegenden Erfindung besteht daher darin, ein Spritzgiesswerkzeug anzugeben, mittels dem Reissverschlussschieber mit wesentlich verringertem Angussvolumen und bevorzugt ohne Angussteile herstellbar sind.

Ein derartiges Spritzgiesswerkzeug ist im Anspruch 1 angegeben. Die weiteren Ansprüche geben bevorzugte Ausführungsformen sowie mit dem Spritzgiesswerkzeug erstellbare Reissverschlussschieber an.

Demgemäss zeichnet sich das erfindungsgemässe Spritzgiesswerkzeug dadurch aus, dass eine Düse, die den Zufluss von geschmolzenem Spritzmaterial in das Formnest steuert, direkt in das Formnest mündet, d.h. in den Hohlraum, der vom gespritzten Reissverschlussschieber eingenommen wird. Damit bricht das gespritzte Produkt direkt an der Düsenmündung ab, und ein Anguss wird vermieden. Es verbleibt nur die Abbruchstelle am Produkt, wo es von der Düse abgetrennt worden ist.

Bevorzugt wird diese Technik in dem Spritzgiesswerkzeug gemäss dem oben genannten europäischen Patent EP-B-0604695 eingesetzt, und in der Beschreibung des Ausführungsbeispiels wird ein Spritzgiesswerkzeug gemäss diesem Patent vorausgesetzt und entsprechend die Beschreibung dieses Patents und der vorangehenden Patentanmeldung EP-A-0604695 vorausgesetzt und durch Bezugnahme in die vorliegende Beschreibung eingeschlossen. Die Anwendung des Prinzips der vorliegenden Patentanmeldung, nämlich die Anordnung der Düsen mit ihrer Mündung direkt am Formnest, ist jedoch auch auf andere Spritzgiesswerkzeuge für Reissverschlussschieber anwendbar.

Besonders bevorzugt, auch in einem Werkzeug gemäss EP-A-0604695, ist das Vorsehen nur einer Düse für das Formnest eines kompletten Reissverschlussschiebers. Dazu muss jedoch dieses Formnest einen Übergang zwischen der Form für die Zuglasche und der Form für den Körper vorsehen. In einer bevorzugten Ausführungsform ist ein solcher Kanal im Bereich zwischen dem Quersteg der Zuglasche, der sich unter dem Bügel über dem Reissverschlussschieber-Körper erstreckt, und dem Bügel vorgesehen. Die dabei nach dem Spritzen bestehende Brücke zwischen Lasche und Bügel wird beim Einsatz des Reissverschlussschiebers oder spätestens bei der ersten Benützung abgebrochen. Die bevorzugte Platzierung dieses Kanals gewährleistet, dass die Reste dieser Verbindung keine nachteiligen Auswirkungen auf den Reissverschlussschieber haben.

Die Erfindung soll weiter an einem bevorzugten Ausführungsbeispiel unter Bezugnahme auf Figuren erläutert werden. Es zeigen:

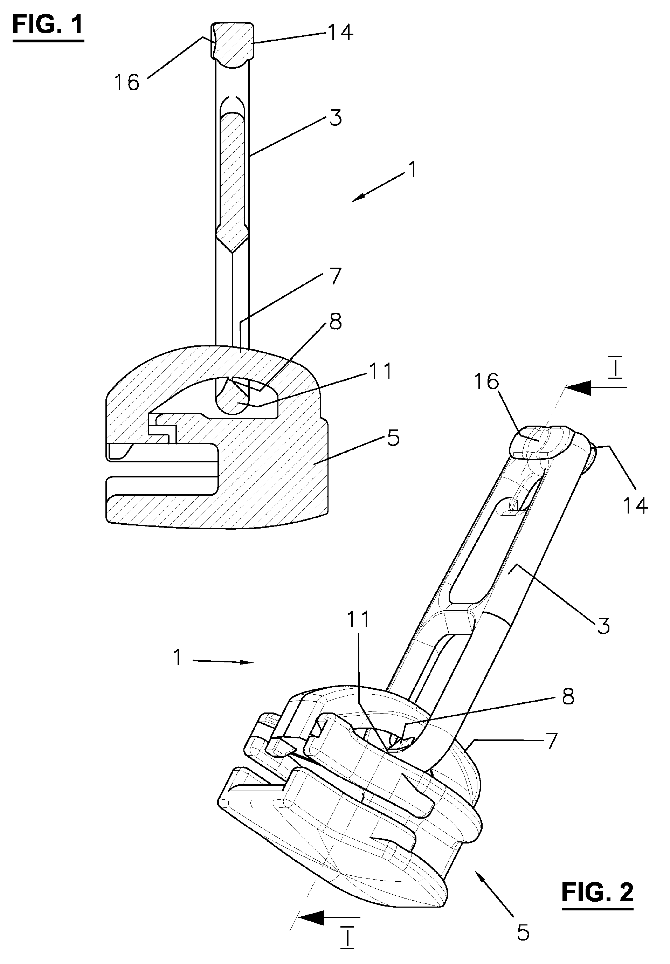

- Fig. 1: Schnitt durch einen Reissverschlussschieber gemäss I-I in Fig. 2;
- Fig. 2: Räumliche Ansicht eines Reissverschlussschiebers, herstellbar in einem erfindungsgemässen Spritzgiesswerkzeug;
- Fig. 3: Aufsicht auf eine Trennfläche eines erfindungsgemässen Spritzgiesswerkzeugs mit 4 Formnestern;
- Fig. 4: Ausschnittvergrösserung gemäss IV in Fig. 3;
- Fig. 5: Teilschnitt gemäss V-V in Fig. 3 durch ein erfindungsgemässes Spritzgiesswerkzeug.

Der Reissverschlussschieber 1 besteht im Wesentlichen aus der Zuglasche 3 und dem Körper 5. Die Zuglasche 3 wird auf bekannte Art mittels eines Bügels 7, der den Körper 5 überspannt, am Körper 5 beweglich gehalten. Typisch für vorliegende Erfindung ist die Materialbrücke 8 zwischen Haltebügel 7 und dem Quersteg 11 der Zuglasche 3, der sich unter dem Haltebügel 7 hindurch erstreckt. Die Brücke 8 ergibt sich aus dem Verbindungskanal, über den Spritzgiessmaterial von der Form für die Zuglasche 3 zunächst über den Bügel in die Form des Reissverschlussschieber-Körpers 5 eingedrungen ist. Bereits beim Ausstossen des Reissverschlussschiebers 1 aus dem Formnest, spätestens aber bei der weiteren Verwendung wirkt die Brücke 8 als Sollbruchstelle und bricht. Allfällig verbleibende kleinere Rückstände sind ohne Bedeutung für die Verwendung des Reissverschlussschiebers und werden auch im Laufe des weiteren Lebens durch Abnutzung entfernt.

Der Reissverschlussschieber wurde mittels eines Spritzgiesswerkzeugs hergestellt, bei dem das Material am körperfernen Ende 14 der Zuglasche 3 eingespritzt wird. Vorliegend findet sich von diesem Vorgang als Spur noch die Vertiefung 16 (Anspritzpunkt), wo die Einspritzdüse in das Formnest des Reissverschlussschiebers mündete.

Der beschriebene Reissverschlussschieber entspricht demjenigen, der aus der EP-A-0604695 bekannt ist. Denkbar ist jedoch, auch andere Spritzgiesswerkzeuge für Reissverschlussschieber, auch solche, bei denen Lasche und Körper separat gespritzt werden, mit Düsen für den verflüssigten Kunststoff auszustatten, die direkt in die jeweiligen Formnester münden, um einen Anguss zu vermeiden.

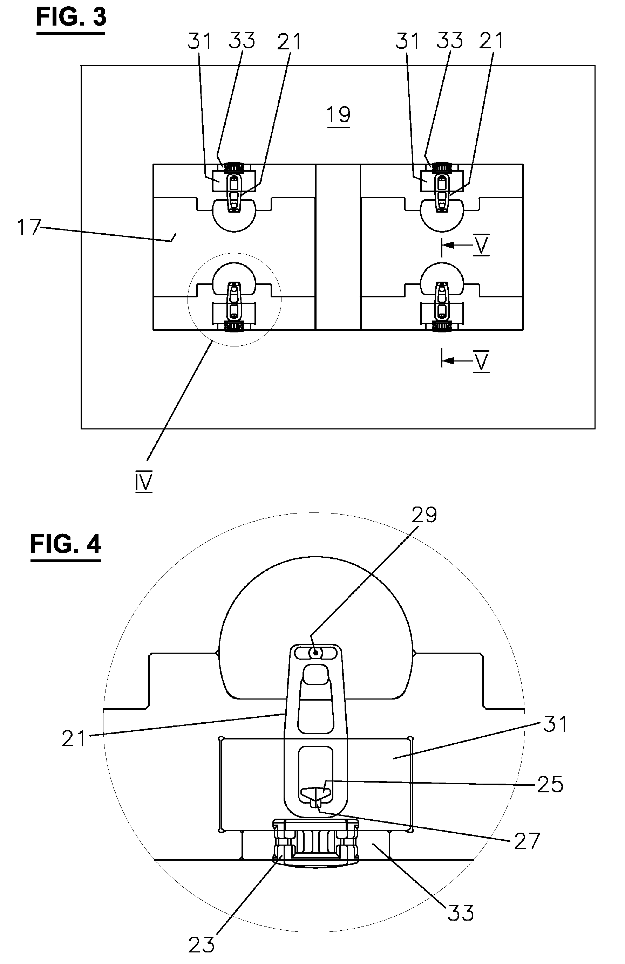

Fig. 3 zeigt eine Draufsicht auf die Trennfläche 17 eines erfindungsgemässen Spritzgiesswerkzeugs 19. Das Spritzgiesswerkzeug weist hier vier Formnester 21 auf, um vier Reissverschlussschieber 1 in einem Durchgang herstellen zu können. Die Anzahl Formnester 21 kann im Rahmen des bekannten Wissens jedoch anders gewählt werden, ohne die Erfindung zu beeinträchtigen. Eines der Formnester 21 ist in Fig. 4 vergrössert dargestellt. Klar erkennbar ist die Formhälfte 21 für die Zuglasche 3, die Körperformhälfte 23 für den hinteren Teil des Schieberkörpers, der Bügelkanal 25 für das Ausbilden des Bügels 7 und schliesslich die Verbindungsvertiefung 27, durch die bei geschlossenem Werkzeug Spritzgiessmaterial, d.h. geschmolzener Kunststoff, von der Laschenform 21 in den Bügelkanal 25 und damit in die Körperform 23 übertreten kann. Im oberen Teil der Laschenformhälfte 21 ist die Mündung der Düse 29 zu sehen. Da vorliegend vom Werkzeug der EP-A-0604695 ausgegangen wurde, sind in Fig. 4 auch die Frontflächen 31 der diagonalen Kerne zur Ausbildung des unteren Teils der Zuglasche 3 und des Auges unter dem Bügel (7) zu erkennen sowie diejenige des senkrecht zur Zeichenebene sich erstreckenden Körperkerns 33, der den hinteren Teil des Schieberkörpers 5 formt. Wie bereits erwähnt sind diese Kerne jedoch kein obligatorischer Bestandteil der Erfindung, die Vorteile der Erfindung kommen jedoch bei der Verwendung eines derartigen oder funktional äquivalenten Werkzeugs besonders eindrücklich zum Tragen.

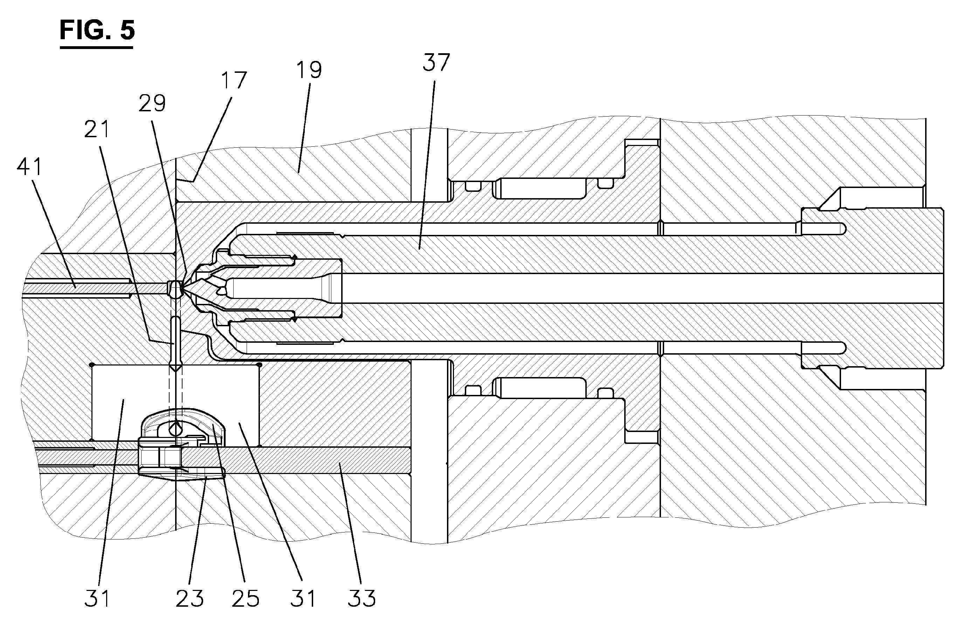

Fig. 5 zeigt einen Teilschnitt quer zur Trennfläche 17 gemäss V-V in Fig. 3. In die Werkzeughälfte 19 erstreckt sich die (beheizte) Düse 37, deren Spitze 29 unmittelbar in die Form 21 für die Zuglasche 3 mündet. Gegenüber der Düse 37 befindet sich ein Ausstosser 41, der bei geöffneter Form die Lasche 3 aus dem Formnest ausstösst.

Da die Düse 37 direkt und übergangslos in die Form für einen Reissverschlussschieber 1, hier seine Lasche 3, mündet, wird offensichtlich ein angussfreies Spritzen von Reissverschlussschiebern mit vorliegender Erfindung ermöglicht.

Abwandlungen und Ergänzungen der beschriebenen Ausführungsform der Erfindung sind dem Fachmann möglich, ohne den Schutzbereich der Erfindung zu verlassen, der durch die Ansprüche definiert wird.

Denkbar sind u.a. die in der Beschreibung bereits erwähnten Varianten, so ein angussloses Spritzen mit Werkzeugen, in denen Lasche und Körper als zwei getrennte Teile hergestellt werden, im einfachsten Fall durch Vorsehen jeweils einer Düse für den Körper und die Lasche; oder Anordnen der Mündung der Düse (37) an einer anderen Stelle des Reissverschlussschieber-Körpers (7).

## Patentansprüche

1. Spritzgiesswerkzeug (19) mit mindestens einem Formnest (21, 23, 25, 27) für das Spritzen eines Reissverschlussschiebers (1) aus Kunststoff, bevorzugt einschliesslich einer Zuglasche (3), wobei als Ventile wirkende Düsen (37) den Zufluss von Kunststoff zum Formnest steuern, **dadurch gekennzeichnet, dass** wenigstens eine Düse (37) im Wesentlichen unmittelbar in ein Formnest mündend angeordnet ist, sodass ein Reissverschlussschieber mit wesentlich verringertem oder ohne Anguss spritzbar ist.

2. Spritzgiesswerkzeug (19) gemäss Anspruch 1, **dadurch gekennzeichnet, dass** sämtliche Düsen (37) eines der Formnester (21, 23, 25, 27), bevorzugt aller Formnester, unmittelbar in das jeweilige Formnest mündend angeordnet sind.

3. Spritzgiesswerkzeug (19) gemäss einem der Ansprüche 1 oder 2, **dadurch gekennzeichnet, dass** zwischen dem Laschenformteil (21) für die Zuglasche (3) des Reissverschlussschiebers (1) und dem Körperformteil (23) für den Reissverschlussschieber-Körper (5) ein Kanal (27) ausgebildet ist, sodass Kunststoff aus dem Laschenformteil (21) in den Körperformteil (23) oder umgekehrt fliessen kann.

4. Spritzgiesswerkzeug (19) gemäss Anspruch 3, **dadurch gekennzeichnet, dass** mindestens ein Formnest (21, 23, 25, 27) eine einzige Düse (37) aufweist.

5. Spritzgiesswerkzeug (19) gemäss Anspruch 4, **dadurch gekennzeichnet, dass** die Düse (37) am entfernt vom Reissverschlussschieber-Körper (5) liegenden Ende der Form (21) zur Ausbildung der Zuglasche (3) in das Formnest mündet.

6. Spritzgiesswerkzeug (19) gemäss einem der Ansprüche 3 bis 5, **dadurch gekennzeichnet, dass** sich der Kanal (27) zwischen den Formnestabschnitten für folgende Teile eines Reissverschlussschiebers (1) erstreckt: von der Innenseite eines den Reissverschlussschieber-Körper (5) überspannenden Bügels (7) zu einem Steg (11) der Zuglasche (3), wobei sich der Steg durch die Öffnung zwischen Bügel und Reissverschlussschieber-Körper erstreckt.

7. Reissverschlussschieber (1), umfassend eine Zuglasche (3) und bestehend aus Kunststoff und hergestellt in einem Werkzeug (19) gemäss einem der Ansprüche 1 bis 6.

8. Reissverschlussschieber (1) gemäss Anspruch 7, **gekennzeichnet durch** eine Angussstelle (16) am Schieberkörper fernen Ende (14) der Zuglasche (3).

9. Reissverschlussschieber (1), gemäss einem der Ansprüche 7 oder 8, **dadurch gekennzeichnet, dass** zwischen der Lasche (3) und einem Bügel (7) zum Halten der Lasche am Reissverschlussschieber-Körper (5) eine als Sollbruchstelle ausgebildete, die Lasche mit dem Bügel verbindende Brücke (8) vorhanden ist.
